## Europäisches Patentamt
## European Patent Office
## Office européen des brevets

(19)

(11) Veröffentlichungsnummer: **0 079 047**
**A2**

(12)
# EUROPÄISCHE PATENTANMELDUNG

(21) Anmeldenummer: 82110150.8

(22) Anmeldetag: 04.11.82

(51) Int. Cl.³: **G 06 K 19/06**
**G 07 F 7/02**

(30) Priorität: 05.11.81 DE 3143915

(43) Veröffentlichungstag der Anmeldung:
18.05.83 Patentblatt 83/20

(84) Benannte Vertragsstaaten:
AT BE CH FR GB IT LI NL SE

(71) Anmelder: BROWN, BOVERI & CIE Aktiengesellschaft
Kallstadter Strasse 1
D-6800 Mannheim 31(DE)

(72) Erfinder: Berthold, Rainer, Dipl.-Phys.
Wielandstrasse 4
D-6901 Gaiberg(DE)

(72) Erfinder: Stritzel, Rainer
Im Schnepfengrund 8
D-6900 Heidelberg(DE)

(74) Vertreter: Kempe, Wolfgang, Dr. et al,
c/o Brown, Boveri & Cie AG Postfach 351
D-6800 Mannheim 1(DE)

(54) Identitätskarte.

(57) Die Identitätskarte, deren Form und Aussehen einer Eurocheque-Karte entspricht, enthält ein optisch lesbares Personalisierungsfeld (1). Daneben enthält die Karte ein weiteres Feld (2), in dem eine integrierte Halbleiterschaltung (4) mechanisch geschützt in die Karte eingesetzt ist. Die Verbindung zwischen der integrierten Halbleiterschaltung (4) und der Außenwelt erfolgt kontaktlos mit Hilfe einer Empfangsantenne (5), einer Gleichrichterschaltung (6), einer Siebschaltung mit Siebkondensatoren (7,9) und Spulen (8), die die Versorgungsspannung für die Halbleiterschaltung (4) erzeugen, sowie mit Hilfe einer Mikrowellen-Sendeantenne (11). Am Ausgang der Gleichrichterschaltung (6) wird eine von der Empfangsantenne (5) empfangene Modulationsenergie ausgekoppelt und über eine Koppelanordnung (12) als Informationssignal an die Halbleiterschaltung (4) weitergeführt.

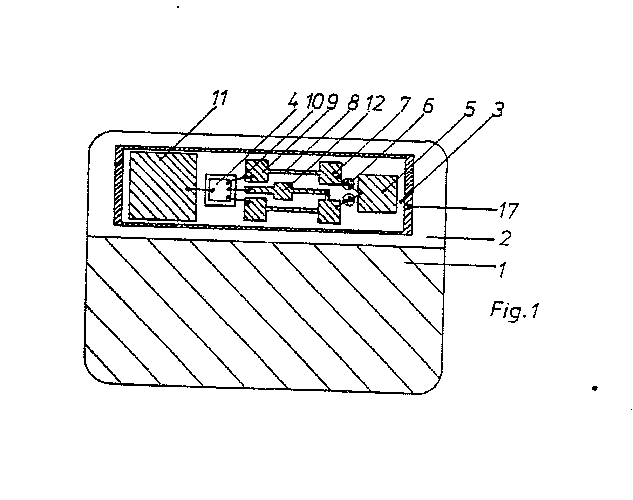

Signifikante Figur: Fig. 1

Stand der Technik:
Frankfurter Allgemeine Zeitung vom 29.8.1981 "Die Kreditwirtschaft plant eine "Geld-Karte"";
Markt + Technik, Nr. 9, 29.2.1980, Seite 66 und 68;
Elektronik-Anzeiger, 1977, Nr. 4, Seite 31 bis 37;
DE-PS 25 08 201;
DE-OS 30 09 179;
DE-OS 29 19 753;
DE-OS 29 46 942;

Fig. 1

Croydon Printing Company Ltd

BROWN, BOVERI & CIE    AKTIENGESELLSCHAFT
Mannheim                                    2. Nov. 1982
Mp.-Nr. 676/81EP                            ZPT/P3-Bi/Bt

## Identitätskarte

Die Erfindung betrifft eine Identitätskarte nach Art
einer Eurocheque-Karte, mit einer mechanisch geschützt
eingesetzten integrierten Halbleiterschaltung, die personenbezogene und/oder nicht personenbezogene Daten
speichert, die auslesbar und - gegebenenfalls in geänderter Form - einlesbar sind.

Derartige Karten sind für die Anwendung als Kreditkarten
bekannt aus der DE-Zeitschrift "Markt + Technik", Nr. 9
vom 29.2.1980, Seiten 66 und 68. Es handelt sich dabei
um eine etwa 0,76mm dicke Karte, die aus drei
PVC-Schichten aufgebaut ist. Eine dazwischen liegende
Polyimidfolie dient als Basismaterial einer gedruckten
Schaltung und trägt mindestens eine integrierte Halbleiterschaltung. Die Folie ist so flexibel, daß leichtes,
beim Gebrauch der Karte unvermeidliches Verbiegen weder
die Karte noch die Halbleiterschaltungen beschädigen
kann. Die mittlere der drei PVC-Schichten ist in dem
Bereich ausgespart, in dem die Halbleiterschaltungen
liegen, so daß Raum für gewisse Bewegungen bleibt. Außer der gedruckten Schaltung mit den Halbleiterschaltungen lassen sich in die Karte auch Lichtbilder, Unterschriften oder ein Magnetstreifen einschweißen, der als zusätzlicher Datenträger dienen kann. Außerdem kann die Karte bei Bedarf geprägt werden. Die Verbindung zwischen den Halbleiterschaltungen, die je nach Bestimmung der Karte die unterschiedlichsten personenbezogenen und sonstigen Daten speichern, erfolgt über Kontakte auf der Oberseite der Karte. Da diese Kontakte während des Gebrauchs der Karte beispielsweise schmutzig werden oder oxidieren können, müssen die Kontakte des Lese- bzw. Datenerfassungsgerätes eine Reitbewegung auf den Kontakten ausführen.

Je nach Anwendungszweck der Karte ist die integrierte Halbleiterschaltung als programmierbarer Nur-Lese-Speicher (PROM), als löschbarer programmierbarer Nur-Lese-Speicher (EPROM) oder als Mikroprozessor ausgebildet sein. Es ist leicht einzusehen, daß die Ausführung mit Mikroprozessor die meisten Möglichkeiten bietet, andererseits auch am teuersten ist. Da jedoch bei derartigen Karten eine Vorsorge gegen Datenmißbrauch und mißbräuchliche Benutzung getroffen werden muß, was einen bestimmten Mindestaufwand nach sich zieht, ist zu erwarten, daß sich die letztzitierte Lösung durchsetzen wird.

Die Schwachstelle aller bisher vorgeschlagenen Systeme liegt in den elektrischen Kontakten, die die Verbindung zwischen der integrierten Halbleiterschaltung und dem Lesegerät herstellen. Diese Kontakte können - wie schon erwähnt - oxidieren bzw. verschmutzen. Außerdem kann sich die Karte selbst oder die Kontaktanordnung in dem Lesegerät dejustieren. Ein weiterer Nachteil der bekannten Konzepte besteht darin, daß die Karte in ganz bestimmter Weise in das Lesegerät eingeführt werden muß, was trotz ausführlicher Bedienungsanleitung auf dem

676/81EP                                3              **0079047**

Lesegerät von vielen Benutzern erst nach mehreren Versuchen geschafft wird.

Der vorliegenden Erfindung liegt die Aufgabe zugrunde, eine Identitätskarte der genannten Art anzugeben, die mit den bereits im Gebrauch befindlichen und den für die Zukunft vorgeschlagenen Karten konvertibel und kompartibel ist, jedoch keine Kontakte benötigt.

Diese Aufgabe wird dadurch gelöst, daß in die Karte zusätzlich eine Hoch- oder Höchstfrequenzantenne bzw. ein Antennenarray als Empfangsantenne, eine Gleichrichterschaltung und eine Siebschaltung, die aus einem Hoch- oder Höchstfrequenz-Energiefeld eine Versorgungsspannung für die Halbleiterschaltung erzeugen, und eine Hoch- oder Höchstfrequenz-Sendeantenne eingesetzt sind und daß die Karte neben der die Daten speichernden und verarbeitenden Halbleiterschaltung einen Sender enthält.

Die Erfindung macht von den in der DE-PS 25 08 201, den DE-OSen 30 09 179, 29 19 753 oder 29 46 942 beschriebenen Vorrichtungen und Verfahren Gebrauch. Es handelt sich dabei um Anlagen, die aus einem ortsfesten Abfragegerät und einem beweglichen Antwortgerät bestehen. Das Abfragegerät besitzt einen Energiesender und einen Öffnungscode-Sender, der den in einem Öffnungscode-Speicher und gegebenenfalls einem Öffnungscode-Zusatzspeicher gespeicherten Öffnungscode aussendet, sowie einen Kennzeichenempfänger und eine Datenverarbeitungseinheit. Das Antwortgerät enthält einen Energieempfänger, der die eingestrahlte Energie in die Stromversorgung für die Elektronik des Antwortgerätes umwandelt. Ferner enthält das Antwortgerät einen Öffnungscode-Empfänger mit nachgeordnetem Öffnungscode-Vergleicher, der den in einem Öffnungscode-Speicher und gegebenenfalls Öffnungscode-Zusatzspeicher gespeicherten Code mit dem über den Funkweg empfangenen Code vergleicht. Das Ausgangssignal des Öffnungscode-Vergleichers steuert über einen Öffnungscode-Verarbeiter einen Kennzeichen-Sender. Das vom Kennzeichen-Sender über einen weiteren Funkweg zum Abfragegerät auszusendende Kennzeichen ist in einem Kennzeichen-Speicher und gegebenenfalls in einem oder mehreren Kennzeichen-Zusatzspeichern gespeichert. Mit Hilfe eines zusätzlichen Kennzeichen-Codierempfängers im Antwortgerät kann der im Kennzeichen-Zusatzspeicher gespeicherte Kennzeichenteil beliebig über Funk geändert werden. Da die eingestrahlte Energie naturgemäß klein ist, der Kennzeichen-Sender jedoch ein möglichst energiereiches Antwortsignal abstrahlen soll, um eine hohe Reichweite zu erzielen, kann der vom Kennzeichen-Sender auszustrahlende Signalträger im ortsfesten Abfragegerät erzeugt und mit dem Energiestrahl und dem Öffnungscode an das bewegliche Antwortgerät übertragen werden, wo der Antwortsignalträger vor seiner Wiederabstrahlung durch den Kennzeichen-Sender lediglich moduliert wird.

Die erfindungsgemäße Identitätskarte bietet die Vorteile, daß keine Kontakte benötigt werden, daß die Karte nicht in ein Lesegerät eingesteckt werden muß, da es genügt, sie lediglich in den eine bestimmte Fläche überdeckenden Energiestrahl zu bringen. So kann es beispielsweise genügen, die Karte auf den S ertresen zu legen, wo die Karte vollautomatisch gelesen wird.

Außerdem ist es möglich, mehrere Karten gleichzeitig zu verarbeiten, wenn das in der DE-OS 29 46 942 beschriebene Verfahren zum Erkennen und/oder Zählen von Objekten von einer zentralen Abfragestelle aus angewendet wird.

Gemäß einer vorteilhaften Weiterbildung sind die Antennen und die Siebschaltung in Streifenleitungstechnik ausgebildet. Dabei bieten sich besonders die Microstrip-Technik oder die Microslot-Technik an, da wegen der vorgegebenen äußeren Abmessungen der Identitätskarten die Abmessungen der Antennen ebenfalls vorgegeben sind und die Streifenleitungstechnik eine seit Jahren bewährte Technik in dem in Frage kommenden Mikrowellenbereich ist.

Vorzugsweise ist die Gleichrichterschaltung als Spannungsverdopplerschaltung ausgebildet. Auf diese Weise ist es möglich, trotz minimalem Aufwand an Antennen und Siebgliedern aus der eingestrahlten Mikrowellenenergie Spannungen von 1,5V zu erzeugen, wie sie zum Betrieb von Niederspannungs-CMOS-Schaltungen erforderlich sind. Niederspannungs-CMOS-Schaltungen benötigen extrem geringe Leistung; sie werden beispielsweise in den bekannten Digital-Uhren eingesetzt.

Gemäß einer weiteren Ausbildung der Erfindung ist eine Koppel-Anordnung vorgesehen, die eine mit der Hoch- oder Höchstfrequenzenergie empfangene Modulationsenergie am Ausgang der Gleichrichterschaltung auskoppelt und als Informationssignal an die Halbleiterschaltung weiterführt. Bei dem Informationssignal handelt es sich gegebenenfalls um den in den obengenannten älteren Patentanmeldungen beschriebenen Öffnungscode und den Änderungscode für den Kennzeichen-Zusatzspeicher sowie um die zum Auslesen sowie gegebenenfalls Wiedereinlesen der personenbezogenen Daten erforderlichen Signale.

Vorteilhafterweise können Empfangsantenne und Sendeantenne zu einem Gebilde zusammengefaßt sein. Diese Lösung ist besonders platzsparend.

Erfindungsgemäße Identitätskarten eignen sich besonders zur Anwendung als Kontokarte, d.h. als Geld-, Scheck- oder Kreditkarte, als Kundenkarte, als Personalausweis, als Firmenausweis mit oder ohne Zugangskontrolle für bestimmte Sicherheitsbereiche, als Gesundheitspaß, als Führerschein, als KFZ-Schein oder auch als Versicherungsausweis. Dabei ist von besonderem Vorteil die Tatsache, daß die Karte nicht sichtbar präsentiert oder gar in ein Lesegerät eingesteckt werden muß; es reicht vielmehr aus, daß die Karte in ein geeignetes Energiefeld gelangt, auch wenn sie dabei z.B. in der Brusttasche des Anzuges stecken bleibt.

Anhand der Zeichnungen soll die Erfindung in Form eines Ausführungsbeispiels näher erläutert werden.

Es zeigen:

Fig. 1    eine Identitätskarte mit Mikrowellen-Empfangs- und -Sendeschaltung,

Fig. 2    das elektrische Ersatz-Schaltbild der Empfangsschaltung und

Fig. 3    eine schematische Darstellung der Anwendung.

Die in der Fig. 1 dargestellte Identitätskarte entspricht in Größe und Aufmachung der bekannten Eurocheque-Karte. Sie enthält ein Feld 1, in dem personenbezogene Daten optisch lesbar dargestellt sind. Sie enthält ein weiteres Feld 2, dessen Vorderseite die eigenhändige Unterschrift des Scheckkarteninhabers und dessen Rückseite gegebenenfalls einen codierten Magnetstreifen trägt. Dieses weitere Feld 2 ist mit abgenommener Deckschicht dargestellt, so daß man die hier eingebettete Elektronik erkennen kann. Man erkennt eine ganzflächige Rückseitenmetallisierung 3, die sich unter einem hochfrequenzgeeigneten Dielektrikum 17, z.B. Aluminiumoxid, Polytetrafluorethylen usw., befindet. In einer Aussparung im Feld 2 befindet sich eine integrierte Halbleiterschaltung 4, die mittels Bond-Drähten 10 mit den übrigen Schaltungskomponenten verbunden ist. Die Aussparung zur Aufnahme der Halbleiterschaltung 4 ist nötig, da Halbleiterschaltungen derzeit noch nicht beliebig dünn kommerziell hergestellt werden können, während die übrigen Schaltungskomponenten in Dünn- oder Dickfilmtechnik hergestellt werden und somit Dicken im Mikrometerbereich besitzen.

Über der Rückseitenmetallisierung 3 befindet sich auf einem Dielektrikum 17 eine Empfangsantenne 5 in Form einer quadratischen Metallfläche. Von der Empfangsantenne 5 sind zwei Dioden 6 zu weiteren Metallflächen 7 geschaltet. Die Metallflächen 7 sind über eine Leiterverbindung 8 mit weiteren Metallflächen 9 verbunden, von denen Bond-Drähte 10 zur Halbleiterschaltung 4 geführt sind. Am Ausgang der Halbleiterschaltung 4 liegt eine Mikrowellen-Sendeantenne 11, ebenfalls in Form einer metallisierten Fläche.

Die beiden Metallflächen 7, 9 sowie die verbindende Leiterbahn 8 bilden einen CLC-Kreis, der als Siebschaltung wirkt und die von der Empfangsantenne 5 aufgenommene und in den Dioden 6 gleichgerichtete Mikrowellenenergie siebt und glättet, so daß sie als Betriebsspannung für die Halbleiterschaltung 4 geeignet ist. Je nach der erforderlichen Siebwirkung genügt es, nur die direkt an die Dioden 6 anschließende Metallisierung 7 vorzusehen und die Bond-Drähte von dieser Metallisierung 7 direkt zur Halbleiterschaltung 4 zu führen; in diesem Fall dienen nur die Bond-Drähte als Drosselspule, während die Ladekapazität in die Halbleiterschaltung 4 integriert wird.

Man erkennt ferner eine Koppelanordnung 12 in Form eines Serien-LC-Kreises. Mit Hilfe dieser Koppelanordnung 12 wird eine mit dem Mikrowellen-Energiefeld übertragene, von der Empfangsantenne 5 aufgenommene Modulationsenergie am Ausgang der Dioden 6 ausgekoppelt und als Informationssignal an die Halbleiterschaltung 4 weitergeführt.

Nicht nur die passive Empfangsschaltung sondern auch die aktive Sendeschaltung kann in Mikrowellen-Hybridtechnik hergestellt werden. Außerdem ist es grundsätzlich möglich, Mikrowellenschaltungen direkt auf einem Halbleitersubstrat herzustellen und die verschiedenen Halbleiterelemente zu integrieren (Elektronik-Anzeiger, 1977, Nr. 4, Seiten 31 bis 37, insbesondere Seite 31).

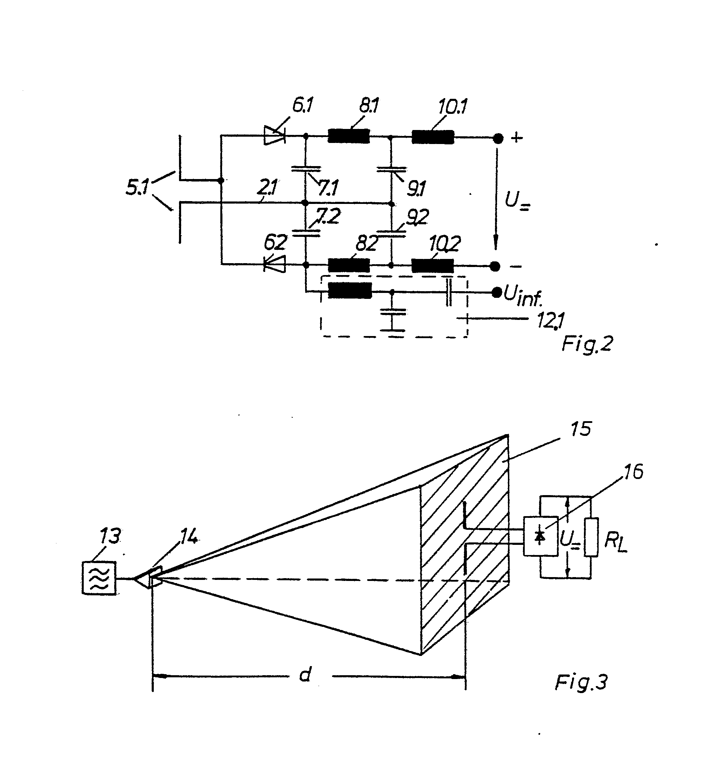

Fig. 2 zeigt das elektrische Ersatz-Schaltbild der in der Fig. 1 in der Streifenleitungstechnik dargestellten Empfangsschaltung. Man erkennt die eigentliche Empfangsantenne 5.1, deren einer Anschluß als elektrischer Mittelpunkt wirkt und an deren anderen Anschluß die beiden Dioden 6.1, 6.2 in Spannungsverdopplerschaltung angeschlossen sind. Am Ausgang der beiden Dioden 6.1,6.2 sind die Ladekondensatoren 7.1, 7.2 gegen den elektrischen Mittelpunkt geschaltet, während der elektrische Strom über die Siebdrosseln 8.1,8.2, die Siebkondensatoren 9.1, 9.2 und weitere Siebdrosseln 10.1, 10.2 zu den Spannungsversorgungsanschlüssen der Halbleiterschaltung 4 fließt. Dabei entsteht eine Versorgungsgleichspannung $U_=$. Am Ausgang der Diode 6.2 ist ferner die Koppelanordnung 12 angekoppelt, die aus dem an den Siebkondensatoren 7.1, 7.2 anstehenden Signalgemisch die mit dem Mikrowellen-Energiefeld empfangene Modulationsenergie auskoppelt und als Informationssignal $u_{inf}$ an die Halbleiterschaltung 4 weiterführt.

Fig. 3 zeigt schematisch ein Anwendungsbeispiel. Man erkennt einen Mikrowellensender 13 mit angeschlossener Horn- oder Planarantenne 14, die ein gebündeltes Strahlungsfeld abstrahlt, welches in einem Abstand von z.B.

d = 2m ein Energiefeld mit einer Ausdehnung von z.B. 2 x 2 m$^2$ aufbaut, welches im Stande ist, am Ausgang einer Gleichrichterschaltung 16, welche der in der Fig. 1 bzw. Fig. 2 dargestellten Schaltung entspricht, eine Versorgungsspannung $U_=$ von 1,5V an einen Lastwiderstand $R_L$ von 150 k zu erzeugen. Dabei wird im Bereich der Antenne die gesetzlich zulässige Energiedichte für Mikrowellen von 10 mW/cm$^2$ bei weitem noch nicht erreicht.

A n s p r ü c h e

1. Identitätskarte nach Art einer Eurocheque-Karte, mit einer mechanisch geschützt eingesetzten integrierten Halbleiterschaltung (4), die personenbezogene und/oder nicht personenbezogene Daten speichert, die auslesbar und gegebenenfalls - in geänderter Form - einlesbar sind, dadurch gekennzeichnet, daß in die Karte zusätzlich eine Hoch- oder Höchstfrequenzantenne bzw. ein Antennenarray als Empfangsantenne (5), eine Gleichrichterschaltung (6,16) und eine Siebschaltung (7,8,9), die aus einem Hoch- oder Höchstfrequenz-Energiefeld (15) eine Versorgungsspannung ($U_=$) für die Halbleiterschaltung (4) erzeugen, und eine Mikrowellen-Sendeantenne (11) eingesetzt sind, und daß die Karte neben der die Daten speichernden Halbleiterschaltung (4) einen Sender enthält.

2. Identitätskarte nach Anspruch 1, dadurch gekennzeichnet, daß die Antennen (5,11) und die Siebschaltung (7,8,9) in Streifenleitungstechnik ausgebildet sind.

3. Identitätskarte nach Anspruch 2, dadurch gekennzeichnet, daß die Antennen (5,11) und die Siebschaltung (7,8,9) in Microstrip-Technik ausgebildet sind.

4. Identitätskarte nach Anspruch 2, dadurch gekennzeichnet, daß die Antennen (5,11) und die Siebschaltung (7,8,9) in Microslot-Technik ausgebildet sind.

5. Identitätskarte nach wenigstens einem der Ansprüche 1 bis 4, dadurch gekennzeichnet, daß die Gleichrichterschaltung (6,16) als Spannungsverdopplerschaltung ausgebildet ist.

6. Identitätskarte nach wenigstens einem der Ansprüche 1 bis 5, dadurch gekennzeichnet, daß eine Koppelanordnung (12) vorgesehen ist, die eine mit der Hoch- oder Höchstfrequenzenergie (15) empfangene Modulationsenergie am Ausgang der Gleichrichterschaltung (6,16) auskoppelt und als Informationssignal ($u_{inf}$) an die Halbleiterschaltung (4) weiterführt.

7. Identitätskarte nach wenigstens einem der Ansprüche 1 bis 6, dadurch gekennzeichnet, daß Empfangsantenne (5) und Sendeantenne (11) zu einem Gebilde zusammengefaßt sind.

8. Verwendung einer Identitätskarte nach den Ansprüchen 1 bis 7 als Kontokarte, d. h. als Geld-, Scheck- oder Kreditkarte, oder als Personalausweis, Kundenkarte, Firmenausweis, Gesundheitspaß, Führerschein, KFZ-Schein, Versicherungsausweis oder dergleichen.

0079047

Fig.1

6.1  8.1  10.1

5.1  2.1  7.1  9.1  $U_=$

7.2  9.2

6.2  8.2  10.2

$U_{inf.}$

12.1

Fig.2

15

16

13  14  $U_=$  $R_L$

d

Fig.3